# EUROPÄISCHE PATENTSCHRIFT

(11) **EP 3 993 240 B1**
(45) Veröffentlichungstag und Bekanntmachung des Hinweises auf die Patenterteilung: **24.06.2026**
(21) Anmeldenummer: 20306295.5
(22) Anmeldetag: 28.10.2020
(51) Int. Cl.: H02K 41/03, H02K 5/22, H02K 3/52, B65G 54/02, H02K 41/00, H01R 13/631, H01R 13/73, H01R 29/00

(54) **TRANSPORTSYSTEM UND VERFAHREN ZUM UMRÜSTEN EINES STECKVERBINDERS IN EINEM TRANSPORTSYSTEM**
TRANSPORT SYSTEM AND METHOD FOR RETROFITTING A CONNECTOR IN A TRANSPORT SYSTEM
SYSTÈME DE TRANSPORT ET PROCÉDÉ DE CHANGEMENT D'UN CONNECTEUR ENFICHABLE DANS UN SYSTÈME DE TRANSPORT

(43) Veröffentlichungstag der Anmeldung: 04.05.2022
(73) Patentinhaber: Schneider Electric Industries SAS, 92500 Rueil Malmaison (FR)
(72) Erfinder: Uihlein, Tobias, 97941 Tauberbischofsheim-Distelhausen (DE); Hartmann, Frank, 97270 Kist (DE); Stollberger, Martin, 97297 Waldbüttelbrunn (DE); Müllerschön, Volker, 97204 Höchberg (DE)
(74) Vertreter: Manitz Finsterwald Patent- und Rechtsanwaltspartnerschaft mbB

(56) Entgegenhaltungen:
- EP-A1- 3 569 528
- WO-A1-2019/150718
- DE-A1- 102011 118 360
- JP-U- H0 680 379
- TW-A- 200 952 308

## Beschreibung

Die vorliegende Erfindung betrifft ein Transportsystem, insbesondere ein Multi-Carrier-System, und Verfahren zum Umrüsten eines Steckverbinders in einem Transportsystem. Das Transportsystem umfasst mehrere Linearmotoren, welche aneinandergereiht angeordnet sind und eine Führungsbahn ausbilden, und zumindest ein Transportelement, welches mittels der Linearmotoren entlang der Führungsbahn bewegbar ist. Transportsysteme, d. h. insbesondere Multi-Carrier-Systeme, umfassen vorzugsweise eine Vielzahl von Transportelementen, sogenannte Läufer, welche mittels mehreren entlang der Führungsbahn angeordneten Linearmotoren bewegt werden. Die Transportelemente sind dabei einzeln und unabhängig voneinander bewegbar, sodass Multi-Carrier-Systeme die Möglichkeit schaffen, flexibel an verschiedene industrielle Prozesse angepasst zu werden und insbesondere auch auf Veränderungen in einem industriellen Prozess flexibel reagieren können.

Ein weiterer Aspekt zum Schaffen eines möglichst vielseitig einsetzbaren Transportsystems ist es, das Transportsystem in seinem Aufbau und hinsichtlich seiner Verwendung und des Anschlusses von möglichen Zusatzgeräten anpassen zu können. Ein Aufbau und Umbau des Transportsystems sowie ein Anschluss möglicher Zusatzkomponenten an dieses sollten daher mit möglichst geringem Aufwand möglich sein.

JP H06-80379 U offenbart ein Transportsystem mit austauschbaren Verbindungsteilen. Weitere Transportsysteme sind etwa aus WO 2019/150718 A1, DE 10 2011 118 360 A1, EP 3 569 528 A1 oder TW 200 952 308 A bekannt.

Der Erfindung liegt folglich die Aufgabe zugrunde, ein Transportsystem vorzuschlagen, welches eine erhöhte Flexibilität hinsichtlich eines Aufbaus, Umbaus und des Anschlusses von Zusatzkomponenten aufweist.

Diese Aufgabe wird erfindungsgemäß durch ein Transportsystem nach Anspruch 1 gelöst.

Das erfindungsgemäße Transportsystem ist insbesondere ein Multi-Carrier-System und umfasst mehrere Linearmotoren, welche aneinandergereiht angeordnet sind und eine Führungsbahn ausbilden, und zumindest ein Transportelement, welches mittels der Linearmotoren entlang der Führungsbahn bewegbar ist, wobei die Linearmotoren jeweils wenigstens einen ersten Anschlussbereich, der einem entlang der Führungsbahn vorgelagerten Linearmotor zugewandt und zugeordnet ist, und einen zweiten Anschlussbereich, der einem entlang der Führungsbahn nachgelagerten Linearmotor zugewandt und zugeordnet ist, aufweisen, wobei jeweils ein Steckverbinder den ersten Anschlussbereich eines entlang der Führungsbahn nachgelagerten Linearmotors und den zweiten Anschlussbereich eines entlang der Führungsbahn vorgelagerten Linearmotors mechanisch miteinander verbindet und eine Leistungs- und/oder Signalverbindung zwischen den benachbarten Linearmotoren herstellt, wobei die ersten Anschlussbereiche der Linearmotoren jeweils identisch an den Linearmotoren angeordnet und ausgebildet sind, und wobei die zweiten Anschlussbereiche der Linearmotoren jeweils identisch an den Linearmotoren angeordnet und ausgebildet sind, sodass die Linearmotoren und die Steckverbinder untereinander austauschbar sind.

Die Erfindung setzt auf der Erkenntnis auf, dass durch die Austauschbarkeit der Linearmotoren und Steckverbinder untereinander ein auf einfache Weise an die gerade herrschenden Anforderungen anpassbares Transportsystem geschaffen werden kann. Zudem wird z.B. der Zeitaufwand für den Auf- oder Umbau des Transportsystems reduziert, da insbesondere keine Verkabelung aufwändig z.B. im Inneren eines Linearmotors neu verbunden oder gelöst werden muss. Stattdessen wird die Verkabelung einfach durch den oder die Steckverbinder hergestellt. Dabei ist es möglich, die Linearmotoren und die Steckverbinder - innerhalb gewisser Grenzen - gegeneinander auszutauschen und zu ersetzen.

Die Austauschbarkeit wird also insbesondere durch den Steckverbinder ermöglicht, der innerhalb des Transportsystems auch in verschiedenen Ausführungsformen eingesetzt werden kann. So kann ein Steckverbinder z.B. zur Leistungsübertragung, ein anderer Steckverbinder aber zur Signalübertragung eingesetzt werden. Da die verschiedenen Steckverbinder aber bevorzugt auf einem mechanisch gleichen Grundkörper aufsetzen und innerhalb des Transportsystems üblicherweise mehrmals in derselben Ausführungsform verwendet werden, kann die oben genannte Austauschbarkeit erzielt werden.

Zudem können von dem Steckverbinder auch Zusatzfunktionen in das Transportsystem implementiert werden, beispielsweise die Integration von Digitalkomponenten, Stromversorgungen, etc., wie unten noch genauer beschrieben. Diese Zusatzfunktionen können im Steckverbinder untergebracht sein und sind folglich mit dem Einstecken der Steckverbinder in den Aufnahmebereich automatisch im Transportsystem enthalten. Außerdem kann der Steckverbinder auch eine mechanische Ausrichtung der Linearmotoren bewirken, wie später noch genauer ausgeführt wird. Der Steckverbinder trägt also dazu bei, das Transportsystem und dessen Auf- und Umbau grundsätzlich zu vereinfachen, wobei trotzdem eine flexible Gestaltung möglich ist.

Die Steckverbinder führen zum einen zu einer mechanischen Verbindung zweier benachbarter Linearmotoren und zum anderen zu einer Leistungs- und/oder Signalverbindung. Da die Steckverbinder vollständig von den Linearmotoren gelöst werden können, kann ein Linearmotor aus dem Transportsystem entnommen werden, sobald keine Steckverbinder zu den beiden benachbarten Linearmotoren mehr gesteckt sind und optionale weitere Befestigungen an den Linearmotoren entfernt wurden. Durch Entfernen der Steckverbinder werden die mechanischen und elektrischen Verbindungen des Steckverbinders zu den benachbarten Linearmotoren dementsprechend getrennt. Umgekehrt müssen neu aneinandergereihte Linearmotoren bevorzugt lediglich durch einen Steckverbinder gekoppelt werden, damit diese mechanisch und elektrisch miteinander verbunden sind.

Weitere Details der Erfindung sind nachfolgend beschrieben.

Unter einer Leistungsverbindung ist insbesondere zu verstehen, dass durch diese Verbindung elektrische Leistung zum Betrieb der Linearmotoren mittels des Steckverbinders von dem vorgelagerten Linearmotor zum nachgelagerten Linearmotor übertragen wird. Beispielsweise kann durch die Leistungsverbindung(en) eines Linearmotors zur Versorgung von nachfolgend noch genauer beschriebenen Segmentgruppen mehr als die von dem Linearmotor benötigte elektrische Leistung übertragen werden. Beispielsweise kann ein Linearmotor einen Bedarf von etwa 10 A bis 20 A haben, und die Leistungsverbindung(en) können zur Übertragung von etwa 60 A bis 75 A ausgebildet sein. Unter der Signalverbindung wird bevorzugt eine elektrische Verbindung verstanden, durch welche elektrische Steuersignale und/oder Datensignale insbesondere von dem vorgelagerten Linearmotor zum nachgelagerten Linearmotor übertragen werden. Beispiele für Steuer- und/oder Datensignale sind Signale für Feldbusse (z.B. Sercos), Ethernet, Enable-Signale, Signale zur Kommunikation der Linearmotoren untereinander und dergleichen mehr.

Die aneinandergereihten Linearmotoren bilden insbesondere Segmente des Transportsystems aus und können nachfolgend auch als solche bezeichnet werden. Vorzugsweise weisen die Linearmotoren jeweils ein eigenes Gehäuse auf, wobei Seitenwände der Gehäuse von benachbarten Linearmotoren etwa parallel zueinander verlaufen und lediglich durch einen etwa 0,1 mm bis 0,2 mm breiten Spalt voneinander beabstandet sind, um zu vermeiden, dass das Transportsystem unter mechanische Spannung gerät, wenn sich die Gehäuse ausdehnen. Alternativ zu dem Spalt können die Seitenwände auch spaltfrei aneinander angrenzen und sich flächig berühren.

Dadurch, dass jeweils einerseits die ersten Anschlussbereiche der Linearmotoren identisch an den Linearmotoren angeordnet und ausgebildet sind und andererseits auch die zweiten Anschlussbereiche der Linearmotoren jeweils identisch an den Linearmotoren angeordnet und ausgebildet sind, ist gewährleistet, dass die Linearmotoren eine einheitlich ausgestaltete und positionierte Schnittstelle für die Steckverbinder ausbilden.

Dass jeweils die ersten und jeweils die zweiten Anschlussbereiche identisch an einem Linearmotor angeordnet sind, bedeutet, dass diese beispielsweise an einer einheitlichen Position auf einer Oberfläche oder Außenfläche des Linearmotors, insbesondere einer Oberfläche des jeweiligen Gehäuses, angeordnet sind. Die einheitliche Position gilt jeweils in Bezug auf benachbarte Linearmotoren, sodass auch sichergestellt ist, dass Linearmotoren, welche Kurvensegmente ausbilden, mit Linearmotoren, welche gerade Segmente ausbilden, aneinandergereiht werden können. Somit sind erste und zweite Anschlussbereiche an benachbarten Linearmotoren, welche für eine Verbindung der Linearmotoren mittels desselben Steckverbinders vorgesehen sind, identisch relativ zueinander angeordnet und weisen dadurch jeweils die gleichen Abstände zueinander auf. Dass die Anschlussbereiche identisch an den Linearmotoren angeordnet sind, kann beispielsweise bedeuten, dass diese jeweils denselben Abstand zu der Führungsbahn aufweisen.

Jeder Linearmotor kann insbesondere sechs Außenflächen aufweisen, nämlich Oberseite, Unterseite, Außenseite, Innenseite und zwei Seitenflächen. Dabei sind die Seitenflächen von benachbarten Linearmotoren durch einen geringen Dehnungsspalt von etwa 0,1 mm bis 0,2 mm zueinander beabstandet oder liegen direkt aneinander an. An der Außenseite kann die Führungsbahn für die Transportelemente ausgebildet sein, wobei Rollen der Transportelemente auf der Außenseite aufliegen. Die Transportelemente können sich durch eine Abwinklung auch in einen Bereich über der Oberseite erstrecken, wobei oberhalb der Oberseite auf den Transportelementen Werkstücke und dergleichen transportiert werden können. Die Innenseite ist im Bereich eines Innenraums angeordnet. Die Steckverbinder sind bevorzugt in der Oberseite und/oder der Unterseite angeordnet.

Die Steckverbinder können ausgebildet sein, eine Leistungs- und eine Signalverbindung zwischen benachbarten Linearmotoren herzustellen, oder sie können ausgebildet sein, entweder eine Leistungs- oder eine Signalverbindung zwischen benachbarten Linearmotoren herzustellen. Bevorzugt können benachbarte Linearmotoren durch einen Steckverbinder, der eine Leistungsverbindung zwischen den benachbarten Linearmotoren herstellt, und einen weiteren Steckverbinder, der eine Signalverbindung zwischen den benachbarten Linearmotoren herstellt, verbunden sein. Wie später noch detailliert ausgeführt wird, können die Steckverbinder einen ersten Steckbereich, der einen der benachbarten Linearmotoren vorzugsweise an seinem ersten Anschlussbereich kontaktiert, und einen zweiten Steckbereich, der den anderen der benachbarten Linearmotoren vorzugsweise an seinem zweiten Anschlussbereich kontaktiert, aufweisen.

Insbesondere können die Steckverbinder zum Herstellen einer Signalverbindung zwischen den benachbarten Linearmotoren hochpolig ausgeführt sein, d.h. beispielsweise zumindest 8, 16 oder zumindest 32 separate elektrische Verbindungen zwischen zwei Linearmotoren ermöglichen.

Das Transportsystem bzw. das Multi-Carrier-System kann insbesondere umlaufend ausgebildet sein, d. h. die Linearmotoren bilden eine geschlossene Führungsbahn entlang der das Transportelement oder die Transportelemente theoretisch endlos in derselben Richtung bewegt werden können. Das Transportelement oder die Transportelemente können dabei beispielsweise auf Rollen fortbewegt und magnetisch angetrieben sein. Dazu weisen die Transportelemente einen oder mehrere Permanentmagnete auf, welche mittels eines sich verändernden und/oder wandernden Magnetfelds, welches von den Linearmotoren erzeugt wird, mit einer Antriebskraft beaufschlagt werden. Die Antriebskraft führt zu einer Bewegung der Transportelemente entlang der Führungsbahn. Mittels der Transportelemente können dadurch beispielsweise Werkstücke entlang der Führungsbahn transportiert werden.

Entlang der Führungsbahn sind mehrere Linearmotoren hintereinander angeordnet. Auf der Führungsbahn können bevorzugt mehrere Transportelemente gleichzeitig angeordnet sein und insbesondere unabhängig und separat voneinander bewegt werden.

Um die Transportelemente auf der Führungsbahn zu halten, werden diese bevorzugt mittels einer Anziehungskraft in einer zu der Bewegungsrichtung des Transportelements senkrechten Richtung zu der Führungsbahn hingezogen. Somit verläuft die Anziehungskraft auch senkrecht zu der Antriebskraft. Die Anziehungskraft verläuft bevorzugt von der Führungsbahn hin zu den Linearmotoren bzw. zu den Spulen des Linearmotors. Die Anziehungskraft wird üblicherweise dadurch erzeugt, dass der Magnet des Transportelements von einem magnetisch leitfähigen Stator des jeweiligen Linearmotors angezogen wird.

Das Transportelement kann auch als Carrier, Mover oder Läufer, der Linearmotor hingegen auch als Stator bezeichnet werden.

Vorteilhafte Weiterbildungen der Erfindung sind der Beschreibung, den Figuren sowie den Unteransprüchen zu entnehmen.

Der erste Anschlussbereich eines entlang der Führungsbahn nachgelagerten Linearmotors und der zweite Anschlussbereich eines entlang der Führungsbahn vorgelagerten Linearmotors gehen ineinander über und bilden gemeinsam einen Aufnahmebereich aus, in dem jeweils ein Steckverbinder aufgenommen ist. Die Anschlussbereiche gehen also ineinander über, sodass der Aufnahmebereich zusammenhängend ist, wenn die Linearmotoren aneinander angrenzend angeordnet sind. Dies erlaubt es, die Steckverbinder geometrisch möglichst einfach, beispielsweise mit einem plattenförmigen Grundkörper, aufzubauen. Ebenso ist es möglich, dass der Steckverbinder im eingesteckten Zustand bündig mit den Gehäusen der Linearmotoren abschließt. Der Steckverbinder erzeugt also keine Erhöhung oder dergleichen, die z. B. den Einbau des Transportsystems in bestehende Systeme behindern könnte.

Der Aufnahmebereich ist durch zwei an den benachbarten Linearmotoren vorgesehene Vertiefungen ausgebildet, wobei der Steckverbinder vorzugsweise bündig in dem Aufnahmebereich anliegt und die benachbarten Linearmotoren zueinander ausrichtet. Dabei kann der Steckverbinder oder jedenfalls ein Abschnitt des Steckverbinders beispielsweise rechteckig und/oder plattenförmig ausgebildet sein und/oder abgerundete Ecken aufweisen, und der Aufnahmebereich ist in diesem Fall derart als Tasche ausgebildet, dass er der Form des Steckverbinders entspricht. Wenn der Aufnahmebereich durch Vertiefungen ausgebildet ist, kann der Steckverbinder mit Grenzflächen seines plattenförmigen Grundkörpers bündig an Grenzflächen des Aufnahmebereichs, das heißt Wandungen der beiden Vertiefungen, anliegen, sodass die benachbarten Linearmotoren, mit denen der Steckverbinder verbunden ist, zueinander ausgerichtet werden. Dies bedeutet, dass der Grundkörper des Steckverbinders ein Verschieben und/oder ein Bewegen der benachbarten Linearmotoren relativ zueinander verhindert.

Bevorzugt liegen der Steckverbinder und die Grenzflächen des Aufnahmebereichs zumindest im Bereich von 5 cm² oder von zumindest 10 cm² direkt aneinander an, wobei durch das Anliegen in diesem Bereich bevorzugt und nötigenfalls eine einem Verschieben und/oder Bewegen entgegenwirkende Kraft erzeugt wird. Der Steckverbinder trägt dadurch nicht nur zum elektrischen Zusammenwirken der Linearmotoren bei, sondern unterstützt auch den mechanischen Aufbau und die mechanische Stabilität.

Um das Ausrichten der Linearmotoren weiter zu vereinfachen, kann der Steckverbinder oder insbesondere mehrere Steckverbinder eine später noch ausführlicher beschriebene Ausrichthilfe aufweisen.

Vorzugsweise weist der Aufnahmebereich eine sich von der Vertiefung weg erstreckende Ausnehmung auf (d.h. ebenfalls eine Vertiefung), wobei der Steckverbinder bevorzugt einen Nebenabschnitt aufweist, der vorzugsweise bündig in die Ausnehmung eingreift. Dies hat zum einen den Vorteil, dass ein weiterer bündiger mechanischer Kontakt, nämlich zwischen der Ausnehmung und dem Nebenabschnitt, hergestellt wird, der das Ausrichten der Linearmotoren erleichtert, und zum anderen, dass der Nebenabschnitt genutzt werden kann, um den Steckverbinder mit einer Möglichkeit zum Einspeisen von Strom und/oder (Daten-)Signalen zu versehen. Dies ist insbesondere der Fall, wenn der Nebenabschnitt etwa quer und etwa horizontal zu der Führungsbahn von den Linearmotoren abragt, insbesondere in einer Richtung von der Führungsbahn weg. Bei einer geschlossenen Topologie des Transportsystems kann der Nebenabschnitt also in einen Innenraum bzw. zu einer Innenseite des Transportsystems gerichtet sein.

Vorzugsweise weist der Steckverbinder einen ersten Steckbereich, der einen der benachbarten Linearmotoren, insbesondere mechanisch und/oder elektrisch, kontaktiert, und einen zweiten Steckbereich, der den anderen der benachbarten Linearmotoren, insbesondere mechanisch und/oder elektrisch, kontaktiert, auf. An den Steckbereichen können jeweils Steckelemente, beispielsweise elektrische Kontakte, vorgesehen sein, mittels denen der Steckverbinder mit den Linearmotoren verbunden wird. Die Steckbereiche können beispielsweise parallel zueinander an gegenüberliegenden Seiten des Steckverbinders angeordnet sein.

Genauer gesagt kann der Steckverbinder einen plattenförmigen Grundkörper aufweisen, an welchem, insbesondere an gegenüberliegenden Enden, die beiden Steckbereiche angeordnet sind. In den Steckbereichen sind bevorzugt jeweils mehrere Steckelemente angeordnet, die durch innerhalb des Grundkörpers verlaufende elektrische Leitungen insbesondere mit Steckelementen des jeweils anderen Steckbereichs elektrisch verbunden sind. Bei den Steckelementen kann es sich um handelsübliche Stecker handeln, beispielsweise um Stecker der FX23 Serie der Firma Hirose und/oder um Stecker des Molex CST-Systems. Grundsätzlich können beliebige Stecker zur Herstellung von Leistungs- und/oder Signalverbindungen als Steckelemente in den Steckbereichen verwendet werden.

Die Steckelemente können in der Richtung eines Normalenvektors aus einer durch den Grundkörper aufgespannten Ebene aus dem Grundkörper hervorstehen. Bevorzugt zeigen dabei alle Steckelemente in die gleiche Richtung.

Es versteht sich, dass in den jeweiligen Anschlussbereichen der Linearmotoren ebenfalls Steckelemente vorgesehen sein können, welche komplementär zu den Steckelementen des jeweiligen Steckbereichs ausgebildet sind. Die Steckelemente des Steckverbinders und der Linearmotoren stellen somit elektrische Verbindungen zwischen den Steckverbindern und den Linearmotoren her.

Um zwischen dem ersten Anschlussbereich und dem zweiten Anschlussbereich von benachbarten Linearmotoren eine Leistungs- und/oder Signalverbindung herzustellen, können die Steckelemente im Inneren des Steckverbinders über eine Platine oder dort verlaufende Leitungen, beispielsweise Sammelschienen aus Metall, miteinander elektrisch verbunden sein. Um hohe Ströme (z.B. ≥ 70 A) leiten zu können, kann die Platine mit einer bis zu 400 µm dicken Kupferschicht versehen sein. Zudem können die Steckelemente als SMD-Bauteile ausgelegt sein.

Die Steckverbinder können, wie erwähnt, dahingehend unterschiedlich ausgestaltet sein, dass diese ferner zum Verbinden mit einer externen Leistungszufuhr, einem Feldbus (insbesondere Sercos), einer Sensor-Aktor-Einheit (beispielsweise einem RFID-Lesegerät) oder anderen Zusatzgeräten eingerichtet sein können, oder dass in die Steckverbinder ein Zusatzgerät integriert sein kann. So kann, je nachdem, welcher Steckverbindertyp zwischen benachbarten Linearmotoren verwendet wird, entweder eine reine Leistungs- oder Signalbrücke zwischen den benachbarten Linearmotoren hergestellt werden, oder es kann zusätzliche elektrische Leistung eingespeist oder ein Zusatzgerät eingebunden werden.

In vorteilhafter Ausgestaltung kann der Steckverbinder einen dritten Steckbereich zum Einspeisen von Strom und/oder Signalen, insbesondere eines Signals zur Sicherheitsabschaltung, das auch als "Safe Force Off-Signal" bezeichnet und nachfolgend noch genauer beschrieben wird, aufweisen. Der dritte Steckbereich kann beispielsweise an dem Nebenabschnitt vorgesehen sein. Der Nebenabschnitt erstreckt sich bevorzugt aus dem plattenförmigen Grundkörper heraus, wobei der Nebenabschnitt aber bevorzugt in der von dem Grundkörper aufgespannten Ebene verläuft. Der dritte Steckbereich ist insbesondere in einem Endbereich des Nebenabschnitts angeordnet. Der dritte Steckbereich wird nicht direkt elektrisch und mechanisch mit einem der beiden Linearmotoren verbunden, sondern beispielsweise mit einer externen Leistungszufuhr, einem Feldbus oder einer Sensor-Aktor-Einheit wie beispielsweise einem RFID-Lesegerät. Der dritte Steckbereich ist vorzugsweise auf einer Innenseite der Linearmotoren, d. h. auf einer von der Führungsbahn abgewandten Seite, angeordnet. Somit können Kabel zu dem dritten Steckbereich geführt werden, ohne dass diese die Bewegung des Transportelements entlang der Führungsbahn stören. Der dritte Steckbereich kann beispielsweise einen um seine eigene, vorzugsweise etwa senkrecht zu einer Erstreckungsrichtung des Nebenabschnitts verlaufende Hochachse schwenkbaren Stromanschluss aufweisen, mittels dem der Linearmotor und damit das Transportsystem mit elektrischer Leistung versorgt werden. Die Schwenkbarkeit ermöglicht das flexible Positionieren einer entsprechenden Stromquelle und eine möglichst wenig störende Führung einer entsprechenden (Strom-)Leitung.

In dem dritten Steckbereich kann beispielsweise ein Steckelement angebracht sein, welches den vorgenannten Stromanschluss realisiert. Dieses Steckelement kann einen der oben genannten Stecker umfassen oder auch einen M17 oder M23 Stecker für Ströme bis zu 20A, 40A oder 70A aufweisen.

Das Steckelement oder die Steckelemente des dritten Steckbereichs können in dieselbe Richtung gerichtet sein, wie die Steckelemente des ersten und zweiten Steckbereichs. Alternativ können das oder die Steckelement(e) des dritten Steckbereichs auch in eine um 90° gekippte Richtung weisen, insbesondere in eine Richtung von der Führungsbahn weg.

Im Bereich des dritten Steckbereichs oder auch angrenzend an den dritten Steckbereich kann der Nebenabschnitt im Vergleich zum plattenförmigen Grundkörper verdickt oder erhöht ausgebildet sein. Hierdurch kann ein versehentliches Einstecken der Steckelemente des dritten Steckbereichs in Steckelemente der Anschlussbereiche verhindert werden.

Alternativ kann der dritte Steckbereich auch auf einer Rückseite des plattenförmigen Grundkörpers angeordnet sein und insbesondere bei eingestecktem Steckverbinder von dem Linearmotor wegragen.

Es versteht sich, dass neben dem Einspeisen von Strom und/oder Signalen auch immer auch ein Auskoppeln möglich ist.

Die Steckelemente können jeweils gemäß Schutzklasse IP65 oder höher ausgelegt sein. Dementsprechend kann auch der gesamte Linearmotor zusammen mit dem Steckverbinder Schutzklasse IP65 oder höher entsprechen.

Vorzugsweise weist der Steckverbinder ein Zusatzgerät auf. Ein solches kann beispielsweise ein Netzteil für eine Sensor-Aktor-Einheit (beispielsweise für ein RFID-Lesegerät) oder eine Feldbuskomponente sein. Das Zusatzgerät kann in den Steckverbinder direkt integriert sein, sodass dieses nicht von extern an den Steckverbinder angeschlossen werden muss. Somit ist es einfach und schnell möglich, die Funktionalität des Zusatzgeräts in das Transportsystem zu integrieren, indem lediglich der entsprechende Steckverbinder ausgewählt und angebracht wird.

Allgemein gesprochen kann das Zusatzgerät z.B. eine Digitalkomponente, wie einen Prozessor oder einen Speicherchip, oder eine elektrische Wandlereinheit, wie einen Transformator oder ein Schaltnetzteil, umfassen. Der Speicherchip kann z.B. die Identifikation des Steckverbinders ermöglichen, insbesondere mittels einer, insbesondere leitungsgebundenen, Datenverbindung.

Bei dem Transformator kann es sich insbesondere um einen Transformator zur Einkopplung von Ethernet-Signalen handeln, z.B. um einen Transformator aus der ALT-Serie der Firma TDK. Die Ethernet-Signale können dabei auch für den Feldbus verwendet werden.

Vorzugsweise können die benachbarten Linearmotoren jeweils durch zwei Steckverbinder miteinander verbunden sein, nämlich durch einen ersten Steckverbinder, der, insbesondere ausschließlich, eine Leistungsverbindung zwischen den benachbarten Linearmotoren herstellt, und durch einen zweiten Steckverbinder, der, insbesondere ausschließlich, eine Signalverbindung zwischen den benachbarten Linearmotoren herstellt. Somit ist gewährleistet, dass zum einen eine Leistungsverbindung zwischen den einzelnen Linearmotoren besteht, sodass das Transportsystem mit elektrischer Leistung versorgt ist, und zum anderen eine Datenkommunikation in dem Transportsystem stattfinden kann. Das später noch erwähnte Safe Force Off-Signal wird bevorzugt mit der Signalverbindung im selben Steckverbinder übertragen. Allerdings ist es auch möglich, dass das Safe Force Off-Signal mit der Leistungsverbindung im selben Steckverbinder übertragen wird.

Durch die räumliche Trennung von Leistungs- und Datensignalen wird eine Störung insbesondere der Datensignale vermieden.

Insbesondere kann der erste Steckverbinder an einer Unterseite des Linearmotors und der zweite Steckverbinder an einer Oberseite des Linearmotors oder umgekehrt vorgesehen sein, sodass die Linearmotoren an zwei gegenüberliegenden Seiten zueinander ausgerichtet sind.

Dementsprechend kann ein jeweiliger Linearmotor einen ersten und zweiten Anschlussbereich auf der Oberseite und einen ersten und zweiten Anschlussbereich auf der Unterseite aufweisen.

In vorteilhafter Ausgestaltung weisen die Linearmotoren jeweils einen Leistungsabschnitt und einen Signalabschnitt auf, wobei der erste Steckverbinder den Leistungsabschnitt und der zweite Steckverbinder den Signalabschnitt kontaktiert. Beispielsweise können der Signalabschnitt an der Oberseite des Linearmotors und der Leistungsabschnitt an der Unterseite des Linearmotors vorgesehen sein. Der Signalabschnitt dient der Datenkommunikation innerhalb des Transportsystems, d. h. der Datenkommunikation mit den Linearmotoren, und der Leistungsabschnitt dient der Versorgung der Linearmotoren mit elektrischer Leistung. Demzufolge dient der erste Steckverbinder der Leistungsübertragung zwischen benachbarten Linearmotoren und gegebenenfalls dem Einspeisen von Strom, und der zweite Steckverbindung dient der Datenkommunikation zwischen den benachbarten Linearmotoren.

Vorzugsweise weist der Steckverbinder ein Identifikationsmerkmal auf, welches insbesondere elektronisch auslesbar sein kann. Dadurch kann bereits beim Anschließen des Steckverbinders an die Linearmotoren automatisch der Typ des Steckverbinders und insbesondere mögliche im dritten Steckbereich vorgesehene Zusatzanschlüsse unmittelbar erkannt werden.

In vorteilhafter Ausgestaltung kann der Steckverbinder eine Ausrichthilfe zum Ausrichten der benachbarten Linearmotoren zueinander aufweisen. Vorzugsweise ist insbesondere wenigstens ein Steckverbinder zur Leistungsverbindung zweier benachbarter Linearmotoren mit der Ausrichthilfe versehen. Besonders bevorzugt ist es, wenn alle in dem Transportsystem vorgesehenen Steckverbinder zur Leistungsverbindung eine Ausrichthilfe aufweisen.

Die Ausrichthilfe kann insbesondere an einem freien Ende eines Grundkörpers des Steckverbinders angeordnet sein. Dieses freie Ende kann insbesondere im gesteckten Zustand des Steckverbinders im Bereich der Außenseite der benachbarten Linearmotoren, und somit im Bereich der Führungsbahn und den Spulen, angeordnet sein. Die Ausrichthilfe kann sich etwa senkrecht von dem Grundkörper weg erstrecken.

An den Linearmotoren, insbesondere im Bereich der Außenseite, können jeweils Aussparungen ausgebildet sein, in die die Ausrichthilfe eingreifen kann. Insbesondere greift die Ausrichthilfe zum Ausrichten zweier benachbarter Linearmotoren in die Aussparungen dieser Linearmotoren ein, wobei die Ausrichthilfe bevorzugt zumindest bereichsweise formschlüssig in den Aussparungen angeordnet wird. Insbesondere durch die Formschluss wird die Ausrichtwirkung erzielt.

Zur Schaffung des Formschlusses kann die Ausrichthilfe einen keilförmigen Bereich aufweisen, der in eine entsprechende keilförmige Aussparung des Linearmotors eingreift. Aus dem keilförmigen Bereich der Ausrichthilfe kann ein, z.B. quaderförmiger, Vorsprung herausragen, welcher eine formschlüssige Verbindung mit den Aussparungen weiter verstärkt.

Durch die Ausrichthilfe wird die Ausrichtung der benachbarten Linearmotoren zueinander während des Aufbaus des Multi-Carrier-Systems erleichtert. Nachdem die Linearmotoren zueinander ausgerichtet sind, können die Linearmotoren z.B. an einem Träger festgeschraubt werden.

Zur Optimierung des magnetischen Flusses zwischen benachbarten Linearmotoren kann die Ausrichthilfe ferner einen magnetischen Werkstoff, insbesondere einem weichmagnetischen Werkstoff wie Eisen, umfassen und im Bereich der Spulen angeordnet sei. Bevorzugt sind der keilförmige Bereich und/oder der quaderförmige Vorsprung aus dem magnetischen Werkstoff gebildet.

Eine mögliche konkrete Ausführungsform des erfindungsgemäßen Transportsystems ist ein Multi-Carrier-System, das mehrere Linearmotoren, welche aneinandergereiht angeordnet sind und eine Führungsbahn ausbilden, und zumindest ein Transportelement, welches mittels der Linearmotoren entlang der Führungsbahn bewegbar ist, umfasst. Die Linearmotoren weisen jeweils einen an der Unterseite angeordneten Leistungsabschnitt und einen an der Oberseite angeordneten Signalabschnitt auf. Die Linearmotoren weisen jeweils einen ersten Anschlussbereich an dem Leistungsabschnitt und einen ersten Anschlussbereich an dem Signalabschnitt, die einem entlang der Führungsbahn vorgelagerten Linearmotor zugewandt und zugeordnet sind, und einen zweiten Anschlussbereich an dem Leistungsabschnitt und einen zweiten Anschlussbereich an dem Signalabschnitt, die einem entlang der Führungsbahn nachgelagerten Linearmotor zugewandt und zugeordnet sind, auf, wobei jeweils ein Steckverbinder die beiden ersten Anschlussbereiche eines entlang der Führungsbahn nachgelagerten Linearmotors und die beiden zweiten Anschlussbereiche eines entlang der Führungsbahn vorgelagerten Linearmotors mechanisch miteinander verbindet und eine Leistungs- bzw. Signalverbindung zwischen den benachbarten Linearmotoren herstellt. Dabei kontaktiert der erste Steckverbinder die Leistungsabschnitte und der zweite Steckverbinder die Signalabschnitte. Die ersten Anschlussbereiche der Linearmotoren sind jeweils identisch an den Linearmotoren angeordnet und ausgebildet, und die zweiten Anschlussbereiche der Linearmotoren sind jeweils identisch an den Linearmotoren angeordnet und ausgebildet. Die jeweils einander zugeordneten ersten Anschlussbereiche des entlang der Führungsbahn nachgelagerten Linearmotors und die zweiten Anschlussbereiche des entlang der Führungsbahn vorgelagerten Linearmotors bilden gemeinsam einen Aufnahmebereich aus, in dem jeweils der Steckverbinder aufgenommen ist.

Die Aufnahmebereiche sind bevorzugt als rechteckige Taschen mit abgerundeten Ecken ausgebildet, in denen ein plattenförmiger Grundkörper des jeweiligen Steckverbinders bündig anliegt. Der Aufnahmebereich weist eine sich von der Vertiefung weg erstreckende Ausnehmung auf, in die ein Nebenabschnitt des Steckverbinders bündig eingreift.

Weiterer Gegenstand der Offenbarung ist ein Set zum Aufbau eines Transportsystems, insbesondere eines Multi-Carrier-Systems, das mehrere Linearmotoren und mehrere, insbesondere verschiedene, Steckverbinder aufweist, wobei die Linearmotoren jeweils wenigstens einen ersten Anschlussbereich und einen zweiten Anschlussbereich aufweisen, wobei jeweils der erste Anschlussbereich eines der Linearmotoren und der zweite Anschlussbereich eines weiteren der Linearmotoren dazu geeignet sind, einander zugewandt und zugeordnet und durch einen der Steckverbinder mechanisch und/oder elektrisch miteinander verbunden zu werden, wobei die ersten Anschlussbereiche der Linearmotoren jeweils identisch an den Linearmotoren angeordnet und ausgebildet sind, und wobei die zweiten Anschlussbereiche der Linearmotoren jeweils identisch an den Linearmotoren angeordnet und ausgebildet sind, wobei die mehreren Steckverbinder
- zumindest einen Steckverbinder zum Herstellen einer Leistungs- und/oder Signalverbindung zwischen den benachbarten Linearmotoren und/oder
- zumindest einen Steckverbinder zum Herstellen ausschließlich einer Leistungsverbindung zwischen den benachbarten Linearmotoren und/oder
- zumindest einen Steckverbinder zum Herstellen ausschließlich einer Signalverbindung zwischen den benachbarten Linearmotoren und/oder
- zumindest einen Steckverbinder zum Einspeisen von Strom und/oder Signalen und/oder
- zumindest einen Steckverbinder zum Verbinden mit einem Zusatzgerät,
umfassen.

Sämtliche in dem Transportsystem und/oder dem Set enthaltenen Steckverbinder können bevorzugt denselben Grundkörper aufweisen, sodass eine mechanische Kompatibilität der Steckverbinder untereinander gegeben ist.

Sofern das vorgenannte Set verschiedene Steckverbinder umfasst, können die jeweiligen Steckverbinder auch mehrmals in dem Set enthalten sein. Bevorzugt umfassen das Transportsystem und/oder das Set einen oder mehrere der vorgenannten Steckverbinder mehrmals, insbesondere zumindest drei Mal, fünf Mal oder zehn Mal. Sind z.B. zehn identische Steckverbinder vorhanden können diese zehn Steckverbinder untereinander ausgetauscht werden.

Gemäß einer Ausführungsform werden mittels der Steckverbinder zumindest zwei funktionale Gruppen von Linearmotoren innerhalb des Transportsystems erzeugt. Eine funktionale Gruppe kann dabei einen oder mehrere Linearmotoren aufweisen. Eine Gruppe von Linearmotoren kann beispielsweise eine "Safety Group" bilden, wobei in einem Gefahrenzustand z.B. alle Linearmotoren der Gruppe gleichzeitig abgeschaltet werden. Das Transportsystem kann alternativ auch lediglich eine funktionale Gruppe, insbesondere eine Safety Group, aufweisen.

Die Abschaltung kann insbesondere über ein sogenanntes Safe Force Off-Signal, ein Signal zur Sicherheitsabschaltung, erfolgen. Das Safe Force Off-Signal bewirkt also das Einschalten (bei eingeschaltetem Safe Force Off-Signal) und Abschalten (bei ausgeschaltetem Safe Force Off-Signal) einer Endstufe mittels der Leistungselektronik eines Linearmotors.

Die Linearmotoren, welchen dasselbe Safe Force Off-Signal zugeführt wird, werden auch als Safe Force Off-Gruppe bezeichnet. Dabei handelt es sich bei einer Safe Force Off-Gruppe um eine Gruppe von Segmenten (Linearmotoren). Die Segmente des Transportsystems können, wie erwähnt, in mehrere dieser Gruppen unterteilt werden, wobei innerhalb dieser Gruppen mittels der jeweiligen Steckverbinder eine Verbindung (bevorzugt eine Signalverbindung) zwischen den Linearmotoren besteht, diese Gruppen jedoch aus Sicherheitsgründen von dem Safe Force Off-Signal benachbarter Gruppen abgeschnitten sind.

Das Safe Force Off-Signal umfasst einen Strom von weniger als 100 mA pro Segment und wird vorzugsweise in Steckverbindern zur Signalverbindung übertragen. Um nun verschiedene Gruppen mit verschiedenen Safe Force Off-Signalen (d.h. Safe Force Off-Gruppen) bilden zu können, sind in dem Transportsystem und/oder dem Set verschiedene Steckverbinder vorgesehen:
- ein Steckverbinder, welcher das Safe Force Off-Signal zwischen zwei benachbarten Linearmotoren überträgt ("Bridge") und/oder
- ein Steckverbinder, welcher das Safe Force Off-Signal zwischen zwei benachbarten Linearmotoren überträgt und zugleich eine Einspeisung des Safe Force Off-Signals an beide der mit dem Steckverbinder direkt verbundenen Linearmotoren gestattet und/oder
- ein Steckverbinder, welcher das Safe Force Off-Signal nicht zwischen zwei benachbarten Linearmotoren überträgt ("Separator") und/oder
- ein Steckverbinder, welcher das Safe Force Off-Signal nicht zwischen zwei benachbarten Linearmotoren überträgt und zugleich eine Einspeisung eines Safe Force Off-Signals an nur einen der mit dem Steckverbinder direkt verbundenen Linearmotoren gestattet.

Die vorgenannten Steckverbinder können eine Signalverbindung zwischen zwei benachbarten Linearmotoren herstellen, obwohl derselbe Steckverbinder das Safe Force Off-Signal nicht überträgt und als Separator wirkt. Dadurch wird z.B. eine Signalverbindung zwischen sämtlichen Linearmotoren hergestellt, lediglich das Einschalten der Linearmotoren erfolgt über das Safe Force Off-Signal.

Alternativ können als Separator wirkende Steckverbinder auch keine Signalverbindung zwischen den benachbarten Linearmotoren aufweisen.

Parallel zu einer Einspeisung des Safe Force Off-Signals können auch weitere Signale mittels des Steckverbinders eingespeist werden.

Das Abschneiden von der Leistungsverbindung geschieht dadurch, dass die Leistungselektronik der Linearmotoren bei Vorliegen eines ausgeschalteten Safe Force Off-Signals die jeweils betroffenen Linearmotoren der Safety Group durch Abschalten einer Endstufe von der Leistungsversorgung abschneidet. Aufgrund dieser Leistungsunterbrechung liegt an der entsprechenden Stelle eine Trennung zweier benachbarter Gruppen hinsichtlich elektrischer Leistung vor.

Die entsprechenden Steckverbinder können gleichzeitig, vorzugsweise an dem dritten Steckbereich, eine Möglichkeit zum Einspeisen von Signalen in nur eine Richtung aufweisen, sodass eine Signalverbindung von außen mit nur entweder dem nachgelagerten Linearmotor, und damit der nachgelagerten Gruppe, oder nur dem vorgelagerten Linearmotor, und damit der vorgelagerten Gruppe, hergestellt wird.

Das Set dient zum Aufbau eines Transportsystems, insbesondere eines Multi-Carrier-Systems, wobei aufgrund der identischen Anordnung und Ausbildung der ersten und zweiten Anschlussbereiche die Steckverbinder beliebig je nach Anforderung ausgetauscht werden können und die Linearmotoren je nach Anforderung an die Topologie des Transportsystems in beliebiger Reihenfolge zueinander angeordnet werden können. Somit weist das Transportsystem eine äußerst hohe Modularität auf, wodurch zum einen die Topologie des Transportsystems schnell und einfach verändert werden kann und zum anderen je nach Bedarf Zusatzgeräte angeschlossen oder zusätzliche elektrische Leistung mit wenig Aufwand eingespeist werden können.

Weiterhin können in dem Transportsystem und/oder dem Set Steckverbinder vorgesehen sein, welche
- eine Segment-zu-Segment-Kommunikation (S2S) zwischen zwei benachbarten Linearmotoren ermöglichen und/oder
- eine Segment-zu-Segment-Kommunikation (S2S) zwischen zwei benachbarten Linearmotoren um einen externen Anschluss erweitern (beispielsweise zur Kommunikation mit einem benachbarten Transportsystem) und/oder
- eine Segment-zu-Segment-Kommunikation (S2S) zwischen zwei benachbarten Linearmotoren unterbrechen und/oder
- welche eine Feldbuskommunikation zwischen zwei benachbarten Linearmotoren ermöglichen und/oder
- welche eine Feldbuskommunikation zwischen zwei benachbarten Linearmotoren unterbrechen und/oder
- welche eine Feldbuskommunikation in einen oder beide der benachbarten Linearmotoren von extern einkoppeln.

Wie mit dem Safe Force Off-Signal können also auch mit der Segment-zu-Segment-Kommunikation und mittels der Feldbuskommunikation Gruppen von Linearmotoren gebildet werden, welche unterschiedliches Verhalten aufweisen können. Bevorzugt sind die Gruppen, welche durch das Safe Force Off-Signal, die Segment-zu-Segment-Kommunikation und die Feldbuskommunikation gebildet werden, identisch (d.h. umfassen jeweils dieselben Linearmotoren).

Das erfindungsgemäße Verfahren zum Umrüsten eines Steckverbinders in einem Transportsystem, das mehrere Linearmotoren aufweist, welche aneinandergereiht und umlaufend angeordnet sind und eine Führungsbahn ausbilden, wobei die Linearmotoren jeweils wenigstens einen ersten Anschlussbereich, der einem entlang der Führungsbahn vorgelagerten Linearmotor zugewandt ist, und einen zweiten Anschlussbereich, der einem entlang der Führungsbahn nachgelagerten Linearmotor zugewandt ist, aufweisen, wobei jeweils ein Steckverbinder den ersten Anschlussbereich eines entlang der Führungsbahn nachgelagerten Linearmotors und den zweiten Anschlussbereich eines entlang der Führungsbahn vorgelagerten Linearmotors mechanisch miteinander verbindet und eine Leistungs- und/oder Signalverbindung zwischen den benachbarten Linearmotoren herstellt, wobei jeweils der erste Anschlussbereich eines entlang der Führungsbahn nachgelagerten Linearmotors und der zweite Anschlussbereich eines entlang der Führungsbahn vorgelagerten Linearmotors ineinander übergehen und gemeinsam einen Aufnahmebereich ausbilden, in dem jeweils ein Steckverbinder aufgenommen ist, und wobei die benachbarten Linearmotoren jeweils eine Vertiefung aufweisen, die gemeinsam den Aufnahmebereich für den Steckverbinder ausbilden, umfasst die folgenden Schritte:
- Entnehmen des Steckverbinders aus den Anschlussbereichen zweier benachbarter Linearmotoren,
- Einsetzen eines weiteren Steckverbinders in die Anschlussbereiche derart, dass der weitere Steckverbinder die zwei benachbarten Linearmotoren mechanisch miteinander verbindet und eine Leistungs- und/oder Signalverbindung zwischen den benachbarten Linearmotoren herstellt.

Das Entnehmen und das Einsetzen sind insbesondere durch einfache Steckverbinder problemlos möglich. Dadurch gestaltet sich das Verfahren äußerst einfach und unkompliziert, sodass das Umrüsten eines Steckverbinders äußerst schnell möglich ist. Durch Einsetzen des weiteren Steckverbinders, d. h. eines anderen Steckverbinders als dem zuvor entnommenen, werden die benachbarten Linearmotoren erneut zueinander ausgerichtet und damit mechanisch miteinander verbunden. Zudem wird eine Leistungs- und/oder Signalverbindung zwischen den benachbarten Linearmotoren hergestellt. Somit sind weder für die mechanische noch für die elektrische Verbindung weitere Schritte erforderlich.

Vorzugsweise wird bei dem Verfahren eine Stromzufuhr, ein Feldbus oder eine Sensor-Aktor-Einheit (zum Beispiel ein RFID-Lesegerät) mit einem dritten Steckbereich des weiteren Steckverbinders verbunden. Durch den weiteren/neuen Steckverbinder kann also z.B. auf einfache Weise eine Leistungseinspeisung nachgerüstet werden.

Die hierin zu dem Transportsystem getroffenen Aussagen gelten entsprechend für das erfindungsgemäße Verfahren. Dies gilt insbesondere hinsichtlich der erwähnten Vorteile und der bevorzugten Ausführungsformen.

Nachfolgend wird die Erfindung schematisch und beispielhaft unter Bezugnahme auf die Zeichnungen beschrieben. Darin zeigt:
- Fig. 1: eine perspektivische Detailansicht eines Multi-Carrier-Systems;
- Fig. 2: eine perspektivische Teilansicht des Multi-Carrier-Systems;
- Fig. 3: eine perspektivische Ansicht zweier benachbarter Linearmotoren;
- Fig. 4: eine perspektivische Ansicht eines einzelnen Linearmotors;
- Fig. 5: eine Ansicht auf einen Steckverbinder zur Signalverbindung zweier Linearmotoren;
- Fig. 6: eine Ansicht auf einen weiteren Steckverbinder zur Signalverbindung zweier Linearmotoren;
- Fig. 7: eine perspektivische Ansicht eines Steckverbinders zur Leistungsverbindung zweier benachbarter Linearmotoren; und
- Fig. 8: eine perspektivische Ansicht eines weiteren Steckverbinders zur Leistungsverbindung zweier benachbarter Linearmotoren, der eine Ausrichthilfe aufweist; und
- Fig. 9: eine perspektivische Ansicht eines einzelnen Linearmotors.

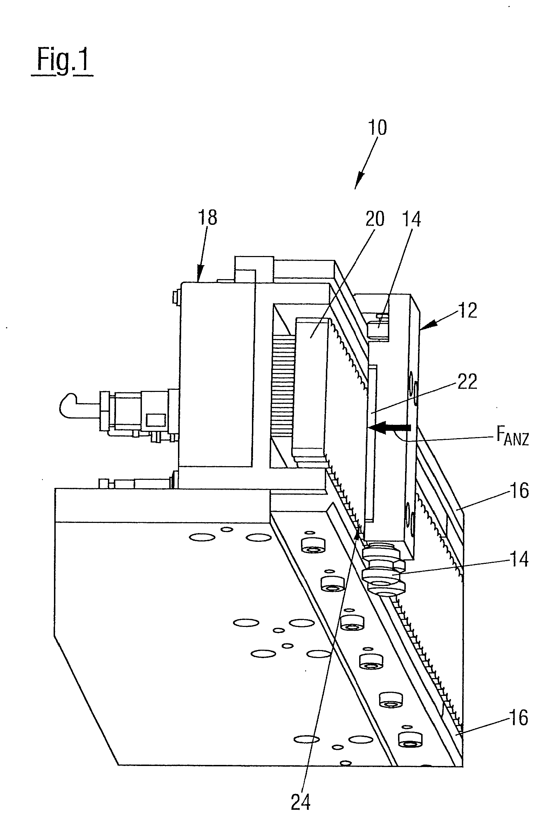

Fig. 1 zeigt ein Detail eines Multi-Carrier-Systems 10 in perspektivischer Ansicht von unten, bei welchem ein Transportelement 12, d. h. ein Carrier, mit Rollen 14 auf einer Führungsbahn 16 mit zwei vertikal beabstandeten Schienen aufliegt. Die Führungsbahn 16 ist Teil eines Linearmotors 18.

Der Linearmotor 18 umfasst eine Vielzahl von Spulen 20, die entlang der Führungsbahn 16 zwischen den Schienen angeordnet sind. Die Spulen 20 erzeugen ein Magnetfeld, welches auf einen Permanentmagneten 22 des Transportelements 12 wirkt und das Transportelement 12 entlang der Führungsbahn 16 bewegt. Die Spulen 20 des Linearmotors 18 sind durch einen Luftspalt 24 von dem Permanentmagneten 22 beabstandet. Der Luftspalt 24 erstreckt sich in vertikaler Richtung, das bedeutet, das Transportelement 12 fährt auf einer Außenseite des Multi-Carrier-Systems 10 entlang.

Der Permanentmagnet 22 wird von dem Linearmotor 18 angezogen und erzeugt dadurch eine Anziehungskraft F_{ANZ}, welche das Transportelement 12 an seinen Rollen 14 auf die Führungsbahn 16 drückt.

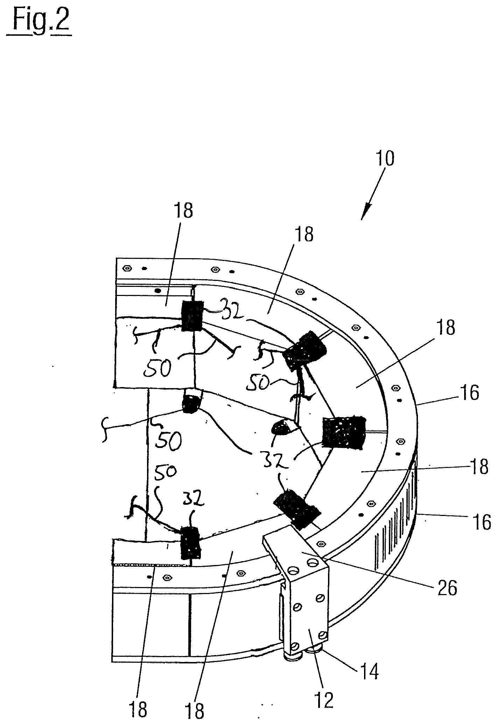

Fig. 2 zeigt das Multi-Carrier-System 10 in einer perspektivischen Ansicht von oben. Darin ist zu erkennen, dass mehrere Linearmotoren 18 aneinandergereiht angeordnet sind, sodass sich eine durchgehende Führungsbahn 16 ergibt. Die Linearmotoren 18 sind durch Steckverbinder 32 jeweils mit benachbarten Linearmotoren 18 verbunden, wobei sich die Steckverbinder 32 an der Oberseite und an der Unterseite der Linearmotoren 18 befinden. An einige der Steckverbinder 32 sind eine oder zwei Leitungen 50 angeschlossen, welche, wie nachfolgend noch detaillierter beschrieben wird, zum Einspeisen von elektrischer Leistung oder Datenkommunikation dienen.

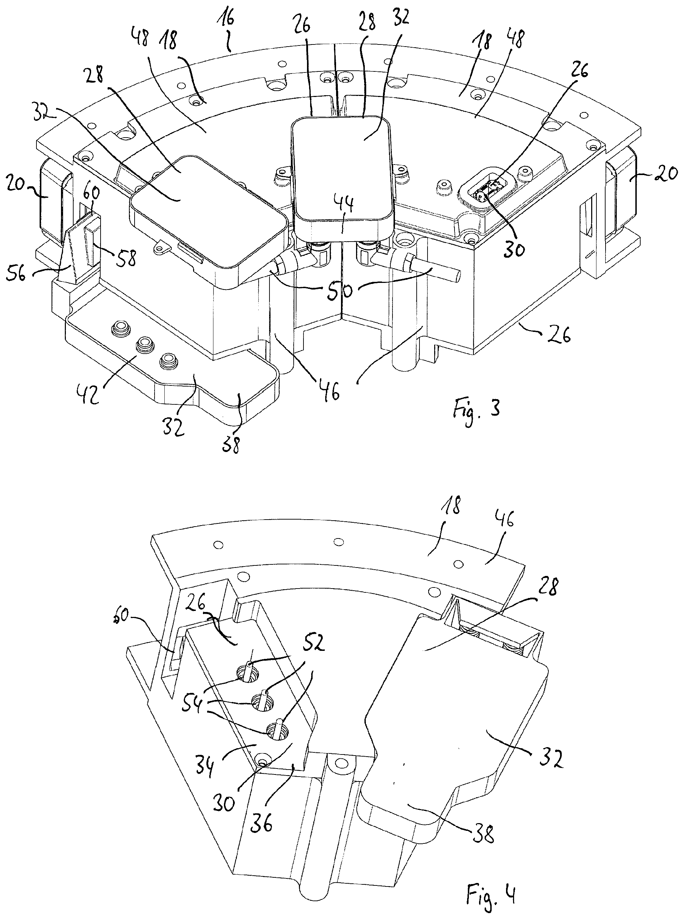

Detailansichten von Linearmotoren 18 sind aus Fig. 3 und Fig. 4 ersichtlich, wobei Fig. 3 zwei benachbarte Linearmotoren 18 mit Blick auf deren Oberseite und Innenseite zeigt, und wobei Fig. 4 einen einzelnen Linearmotor 18 mit Blick auf dessen Unter- und Innenseite zeigt. Die Linearmotoren 18 weisen sowohl an ihrer Unterseite als auch an ihrer Oberseite jeweils erste Anschlussbereiche 26 auf, welche dem entlang der Führungsbahn 16 vorgelagerten Linearmotor 18 zugewandt sind. Ebenfalls weisen die Linearmotoren 18 an ihrer Oberseite und an ihrer Unterseite zweite Anschlussbereiche 28 auf, welche dem entlang der Führungsbahn 16 nachgelagerten Linearmotor 18 zugewandt sind.

Wie insbesondere aus Fig. 3 ersichtlich ist, bilden jeweils ein erster Anschlussbereich 26 und ein zweiter Anschlussbereich 28 von benachbarten Linearmotoren 18 gemeinsam einen Aufnahmebereich 30 in dem jeweils ein Steckverbinder 32 aufgenommen ist. Dabei zeigt Fig. 4 auch einen an der Unterseite angeordneten ersten Anschlussbereich 26, in welchem zu Darstellungszwecken kein Steckverbinder 32 gezeigt ist. Der erste Anschlussbereich 26 ist eine Vertiefung 34, die etwa rechteckig mit abgerundeten Ecken ausgebildet ist. In der Vertiefung 34 sind als Kontakte ausgebildete Steckelemente 52 vorgesehen, wobei im vorliegenden Ausführungsbeispiel drei Pins als Steckelemente 52 vorgesehen sind. Die Steckelemente 52 sind durch Dichtungen 54 abgedichtet. Die Vertiefung 34 bildet gemeinsam mit einer weiteren Vertiefung eines benachbarten Linearmotors 18 (in Fig. 4 nicht dargestellt), welche symmetrisch zu der Vertiefung 34 ausgebildet ist, den Aufnahmebereich 30 für einen Steckverbinder 32 aus. Der Steckverbinder 32 kann insbesondere rechteckig mit abgerundeten Ecken und plattenförmig ausgebildet sein, um in den so gebildeten Aufnahmebereich 30 eingesetzt werden zu können und bündig an der Wandung der Vertiefung 34 anzuliegen.

Wie insbesondere Fig. 3 zeigt, bildet der darin unten zwischen den beiden Linearmotoren 18 gebildete Aufnahmebereich 30 eine Ausnehmung 36 aus, in der ein Nebenabschnitt 38 des entsprechenden Steckverbinders 32 angeordnet ist. Der Nebenabschnitt 38 liegt bündig in der Ausnehmung 36 an, sodass der Nebenabschnitt 38 zu der Ausrichtung der beiden Linearmotoren 18 beiträgt.

Die in Fig. 3 und 4 gezeigten Linearmotoren weisen jeweils einen Leistungsabschnitt 46 und einen in Fig. 4 verdeckten Signalabschnitt 48 auf. Der Signalabschnitt 48 dient jeweils der Datenkommunikation zwischen den benachbarten Linearmotoren 18 und damit innerhalb des Transportsystems 10, und die an der Unterseite vorgesehenen Leistungsabschnitte 46 dienen der Versorgung der Linearmotoren 18 mit elektrischer Leistung. Dementsprechend sind an den Signalabschnitten 48 Steckverbinder 32 vorgesehen, welche geeignet sind, eine Signalverbindung zwischen den benachbarten Linearmotoren 18 herzustellen. An den Leistungsabschnitten 46 sind Steckverbinder 32 vorgesehen, welche geeignet sind, eine Leistungsverbindung zwischen den benachbarten Linearmotoren 18 herzustellen. Die Steckverbinder 32 in den unterschiedlichen Ausführungen werden nachfolgend noch genauer beschrieben. Wie zudem ersichtlich ist, sind in Fig. 3 Leitungen 50 an den Steckverbinder 32, welcher die Signalabschnitte 48 der beiden Linearmotoren 18 kontaktiert, angeschlossen. Die Leitungen 50 dienen der Anbindung von Zusatzgeräten, beispielsweise von Sensor-Aktor-Einheiten oder einer Feldbuskomponente. Darüber hinaus ist es auch möglich, die Verbindung eines Feldbusses in das Transportsystem 10 mittels eines Linearmotors 18 herzustellen. Gleichermaßen kann über den Steckverbinder 32, welcher die Leistungsabschnitte 46 der beiden Linearmotoren 18 kontaktiert, beispielsweise eine Stromzufuhr angeschlossen werden, um bei Bedarf elektrische Leistung in das jeweilige Segment einzuspeisen.

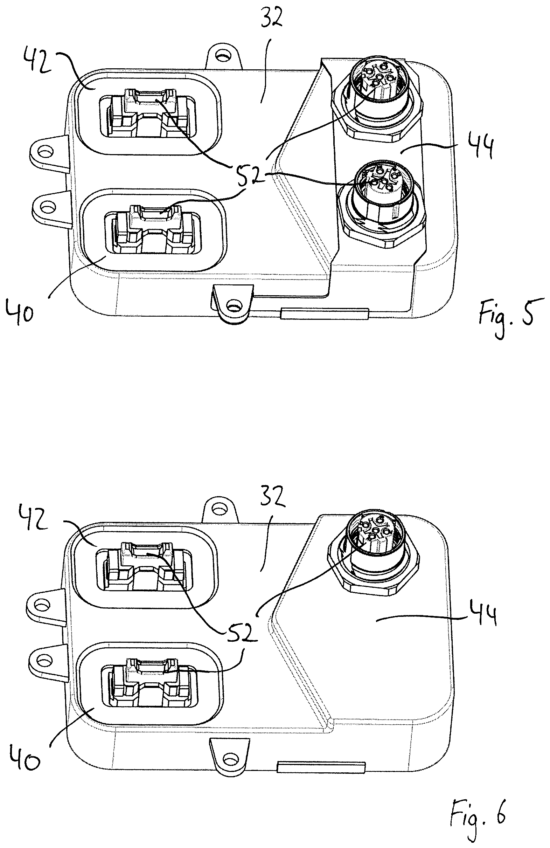

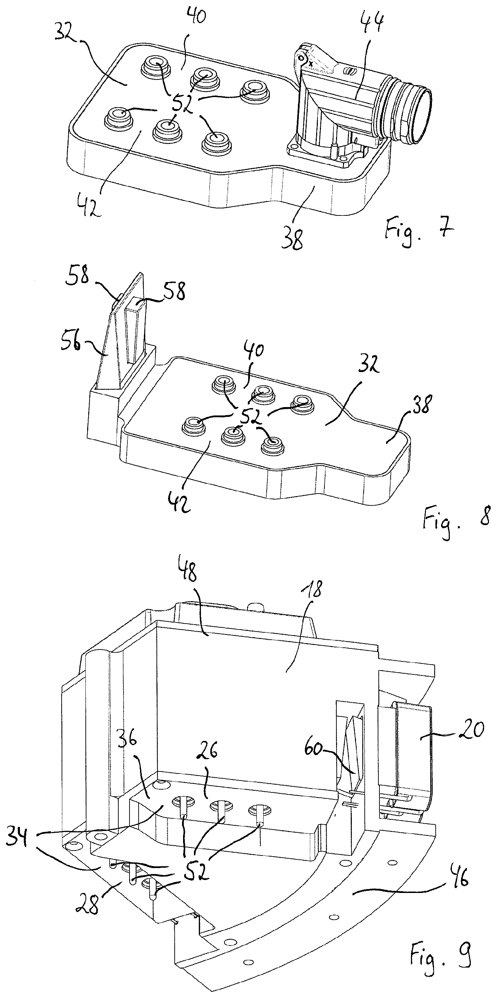

Wie aus Fig. 5 bis 8 ersichtlich ist, weisen die Steckverbinder 32 jeweils einen ersten Steckbereich 40, einen zweiten Steckbereich 42 und, optional, einen dritten Steckbereich 44 auf. Dabei zeigen Fig. 5 und 6 jeweils Steckverbinder 32, die zur Übertragung von Daten vorgesehen sind, d. h. den Signalabschnitt 48 des jeweiligen Linearmotors 18 kontaktieren, und Fig. 7 und 8 zeigen jeweils einen Steckverbinder 32, der zur Übertragung von elektrischem Strom ausgebildet ist und an dem Leistungsabschnitt 46 der jeweiligen Linearmotoren angebracht wird. Die in den Figuren linken Steckelemente 52 von Fig. 5 und Fig. 6 sind zur Datenübertragung hochpolig ausgeführt, wohingegen die Steckelemente 52 in Fig. 7 und 8 zur Übertragung hoher Ströme ausgebildet sind.

Der erste Steckbereich 40, der zweite Steckbereich 42 und der dritte Steckbereich 44 weisen jeweils Steckelemente 52 auf. Diese können beispielsweise als Buchsen, als Kontakte oder als einzelne Stecker ausgebildet sein.

Die ersten Anschlussbereiche 26, die zweiten Anschlussbereiche 28 und, dadurch, die Aufnahmebereiche 30 sind mit Bezug auf die jeweilig geeigneten Steckverbinder 32 identisch ausgebildet, sodass die Steckverbinder 32 je nachdem, ob ausschließlich eine Brücke zwischen benachbarten Linearmotoren 18 hergestellt werden soll oder zusätzlich Geräte eingespeist werden sollen, zueinander passen. Dabei liegen die Steckverbinder 32, bzw. jedenfalls ein Teilabschnitt des Steckverbinders 32, in den jeweiligen Aufnahmebereichen 30 bündig an, sodass diese die Linearmotoren 18 zueinander ausrichten. Dadurch, dass die ersten Anschlussbereiche 26 und die zweiten Anschlussbereiche 28 identisch ausgebildet und an den Oberflächen der Linearmotoren 18 identisch angeordnet sind, können die Linearmotoren 18 zudem in beliebiger Reihenfolge zueinander aneinandergereiht werden, sodass die Topologie eines Transportsystems 10 schnell und unkompliziert verändert, insbesondere erweitert oder umgebaut werden kann.

Wie in Fig. 8 gezeigt, können die Steckverbinder 32, insbesondere Steckverbinder 32 zur Leistungsverbindung, eine Ausrichthilfe 56 aufweisen. Die Ausrichthilfe 56 ist an einem freien Ende eines Grundkörpers des Steckverbinders 32 angeordnet und erstreckt sich etwa senkrecht und vorzugsweise parallel zu den Steckelementen 52 von diesem weg. Vorzugsweise ist die Ausrichthilfe 56 an einem freien Ende des Grundkörpers angeordnet, das im gesteckten Zustand der Außenseite der benachbarten Linearmotoren 18 und somit der Führungsbahn 16 und den Spulen 20 zugewandt ist. Die Ausrichthilfe 56 weist im vorliegenden Beispiel eine Keilform mit beidseitig abragende Vorsprünge 58 auf.

Wie insbesondere Fig. 3 und 9 zeigen, können die Linearmotoren 18 jeweils Aussparungen 60 aufweisen, die vorzugsweise an deren Außenseite ausgebildet sind. Ferner sind die Aussparungen 60 so ausgebildet, dass sie eine Öffnung in den jeweiligen Seitenflächen der Linearmotoren 18 ausbilden. Die Aussparungen 60 werden von Grenzflächen der magnetisch leitenden Statoren der Linearmotoren 18 begrenzt sind so ausgebildet, dass die Ausrichthilfe 56 in die Aussparungen 60 eingreifen kann, wenn ein Steckverbinder 32, der eine Ausrichthilfe 56 aufweist, mit dem jeweiligen Linearmotor 18 verbunden ist. Insbesondere greift die Ausrichthilfe 56 dabei in die Aussparungen 60 zweier benachbarter Linearmotoren 18 ein, wobei mittels der Vorsprünge 58 eine formschlüssige Verbindung zu den Aussparungen 60 hergestellt wird. Dadurch wird die Ausrichtung der benachbarten Linearmotoren 18 zueinander während des Aufbaus des Multi-Carrier-Systems erleichtert. Ferner kann die Ausrichthilfe 56 aus einem magnetischen Werkstoff, insbesondere einem weichmagnetischen Werkstoff wie Eisen, bestehen, um einen magnetischen Fluss zwischen benachbarten Linearmotoren 18 (bzw. deren Statoren) zu ermöglichen oder zu verbessern.

Aus den vorstehenden Ausführungen ist ersichtlich, dass das Zusammenspiel von Steckverbindern 32 und Linearmotoren 18 verschiedenste Anwendungsszenarien realisiert werden können. Durch das erfindungsgemäße Transportsystem 10 ergibt sich somit eine äußerst hohe Modularität, die es ermöglicht, auf wechselnde Anforderungen schnell zu reagieren und mit wenig Aufwand das Transportsystem 10 an diese anzupassen und gegebenenfalls Zusatzgeräte in das Transportsystem 10 einzubringen.

### Bezugszeichenliste

- 10: Multi-Carrier-System
- 12: Transportelement (Carrier)
- 14: Rollen
- 16: Führungsbahn
- 18: Linearmotor
- 20: Spule
- 22: Permanentmagnet
- 24: Luftspalt
- 26: erster Anschlussbereich
- 28: zweiter Anschlussbereich
- 30: Aufnahmebereich
- 32: Steckverbinder
- 34: Vertiefung
- 36: Ausnehmung
- 38: Nebenabschnitt
- 40: erster Steckbereich
- 42: zweiter Steckbereich
- 44: dritter Steckbereich
- 46: Leistungsabschnitt
- 48: Signalabschnitt
- 50: Leitung
- 52: Steckelement
- 54: Dichtung
- 56: Ausrichthilfe
- 58: Vorsprung
- 60: Aussparung
- F_{ANZ}: Anziehungskraft

## Patentansprüche

1. Transportsystem, insbesondere Multi-Carrier-System (10), umfassend mehrere Linearmotoren (18), welche aneinandergereiht angeordnet sind und eine Führungsbahn (16) ausbilden, und
zumindest ein Transportelement (12), welches mittels der Linearmotoren (18) entlang der Führunqsbahn (16) bewegbar ist sowie jeweils einen Steckverbinder (32),
wobei die Linearmotoren (18) jeweils wenigstens einen ersten Anschlussbereich (26), der einem entlang der Führungsbahn (16) vorgelagerten Linearmotor (18) zugewandt und zugeordnet ist, und einen zweiten Anschlussbereich (28), der einem entlang der Führungsbahn (16) nachgelagerten Linearmotor (18) zugewandt und zugeordnet ist, aufweisen, wobei der jeweils eine Steckverbinder (32) den ersten Anschlussbereich (26) eines entlang der Führungsbahn (16) nachgelagerten Linearmotors (18) und den zweiten Anschlussbereich (28) eines entlang der Führungsbahn (16) vorgelagerten Linearmotors (18) mechanisch miteinander verbindet und eine Leistungs- und/oder Signalverbindung zwischen den benachbarten Linearmotoren (18) herstellt,
wobei die ersten Anschlussbereiche (26) der Linearmotoren (18) jeweils identisch an den Linearmotoren (18) angeordnet und ausgebildet sind, und wobei die zweiten Anschlussbereiche (28) der Linearmotoren (18) jeweils identisch an den Linearmotoren (18) angeordnet und ausgebildet sind, sodass die Linearmotoren (18) und die Steckverbinder (32) austauschbar sind,
und wobei jeweils der erste Anschlussbereich (26) eines entlang der Führungsbahn (16) nachgelagerten Linearmotors (18) und der zweite Anschlussbereich (28) eines entlang der Führungsbahn (16) vorgelagerten Linearmotors (18) ineinander übergehen und gemeinsam einen Aufnahmebereich (30) ausbilden, in dem jeweils ein Steckverbinder (32) aufgenommen ist,
**dadurch gekennzeichnet, dass** die benachbarten Linearmotoren (18) jeweils eine Vertiefung (34) aufweisen, die gemeinsam den Aufnahmebereich (30) für den Steckverbinder (32) ausbilden.

2. Transportsystem nach Anspruch 1,
**dadurch gekennzeichnet, dass** der Steckverbinder (32) bündig in dem Aufnahmebereich (30) anliegt und die benachbarten Linearmotoren (18) zueinander ausrichtet.

3. Transportsystem nach Anspruch 1 oder 2,
**dadurch gekennzeichnet, dass** der Aufnahmebereich (30) eine sich von der Vertiefung (34) weg erstreckende Ausnehmung (36) aufweist, wobei der Steckverbinder (32) einen Nebenabschnitt (38) aufweist, der vorzugsweise bündig in die Ausnehmung (36) eingreift.

4. Transportsystem nach einem der vorstehenden Ansprüche,
**dadurch gekennzeichnet, dass** der Steckverbinder (32) einen ersten Steckbereich (40), der einen der benachbarten Linearmotoren (18) kontaktiert, und einen zweiten Steckbereich (42), der den anderen der benachbarten Linearmotoren (18) kontaktiert, aufweist.

5. Transportsystem nach Anspruch 4,
**dadurch gekennzeichnet, dass** der Steckverbinder (32) einen dritten Steckbereich (44) zum Einspeisen von Strom und/oder Signalen, insbesondere eines Signals zur Sicherheitsabschaltung, aufweist.

6. Transportsystem nach Anspruch 5,
**dadurch gekennzeichnet, dass** der dritte Steckbereich (44) ausgebildet ist, mit einer Stromzufuhr, einem Feldbus oder einer Sensor-Aktor-Einheit, insbesondere einem RFID-Lesegerät, verbunden zu werden.

7. Transportsystem nach einem der vorstehenden Ansprüche,
**dadurch gekennzeichnet, dass** der Steckverbinder (32) ein Zusatzgerät, insbesondere ein Netzteil für eine Sensor-Aktor-Einheit oder eine Feldbuskomponente, aufweist.

8. Transportsystem nach einem der vorstehenden Ansprüche,
**dadurch gekennzeichnet, dass** die benachbarten Linearmotoren (18) durch einen ersten Steckverbinder (32), der eine Leistungsverbindung zwischen den benachbarten Linearmotoren (18) herstellt, und einen zweiten Steckverbinder (32), der eine Signalverbindung zwischen den benachbarten Linearmotoren (18) herstellt, miteinander verbunden sind.

9. Transportsystem nach Anspruch 8,
**dadurch gekennzeichnet, dass** die Linearmotoren (18) jeweils einen Leistungsabschnitt (46) und einen Signalabschnitt (48) aufweisen, wobei der erste Steckverbinder (32) den Leistungsabschnitt (46) und der zweite Steckverbinder (32) den Signalabschnitt (48) kontaktiert.

10. Transportsystem nach einem der vorstehenden Ansprüche,
**dadurch gekennzeichnet, dass** der Steckverbinder (32) ein Identifikationsmerkmal aufweist, welches insbesondere elektronisch auslesbar ist.

11. Transportsystem nach einem der vorstehenden Ansprüche,
**dadurch gekennzeichnet, dass** der Steckverbinder (32) eine Ausrichthilfe (56) zum Ausrichten der benachbarten Linearmotoren (18) zueinander aufweist, wobei die Ausrichthilfe (56) bevorzugt einen magnetischen Fluss zwischen benachbarten Linearmotoren (18) überträgt.

12. Transportsystem nach einem der vorstehenden Ansprüche,
**dadurch gekennzeichnet, dass** mittels der Steckverbinder (32) zumindest zwei funktionale Gruppen von Linearmotoren (18) innerhalb des Transportsystems erzeugt werden.

13. Verfahren zum Umrüsten eines Steckverbinders (32) in einem Transportsystem, das mehrere Linearmotoren (18) aufweist, welche aneinandergereiht angeordnet sind und eine Führungsbahn (16) ausbilden, wobei die Linearmotoren (18) jeweils wenigstens einen ersten Anschlussbereich (26), der einem entlang der Führungsbahn (16) vorgelagerten Linearmotor (18) zugewandt ist, und einen zweiten Anschlussbereich (28), der einem entlang der Führungsbahn (16) nachgelagerten Linearmotor (18) zugewandt ist, aufweisen, wobei jeweils ein Steckverbinder (32) den ersten Anschlussbereich (26) eines entlang der Führungsbahn (16) nachgelagerten Linearmotors (18) und den zweiten Anschlussbereich (28) eines entlang der Führungsbahn (16) vorgelagerten Linearmotors (18) mechanisch miteinander verbindet und eine Leistungs- und/oder Signalverbindung zwischen den benachbarten Linearmotoren (18) herstellt, wobei jeweils der erste Anschlussbereich (26) eines entlang der Führungsbahn (16) nachgelagerten Linearmotors (18) und der zweite Anschlussbereich (28) eines entlang der Führungsbahn (16) vorgelagerten Linearmotors (18) ineinander übergehen und gemeinsam einen Aufnahmebereich (30) ausbilden, in dem jeweils ein Steckverbinder (32) aufgenommen ist, und wobei die benachbarten Linearmotoren (18) jeweils eine Vertiefung (34) aufweisen, die gemeinsam den Aufnahmebereich (30) für den Steckverbinder (32) ausbilden, wobei das Verfahren umfasst:
Entnehmen des Steckverbinders (32) aus den Anschlussbereichen (26, 28) zweier benachbarter Linearmotoren (18);
Einsetzen eines weiteren Steckverbinders (32) in die Anschlussbereiche (26, 28) derart, dass der weitere Steckverbinder (32) die zwei benachbarten Linearmotoren (18) mechanisch miteinander verbindet und eine Leistungs- und/oder Signalverbindung zwischen den benachbarten Linearmotoren (18) herstellt.

## Claims

1. A transport system, in particular a multi-carrier system (10), comprising a plurality of linear motors (18) which are arranged in a row and form a guideway (16), and
at least one transport element (12), which is movable along the guideway (16) by means of the linear motors (18), as well as a respective plug connector (32),
wherein the linear motors (18) each have at least a first connection region (26), which faces and is associated with a linear motor (18) located upstream along the guideway (16), and a second connection region (28), which faces and is associated with a linear motor (18) located downstream along the guideway (16), wherein the respective plug connector (32) mechanically connects the first connection region (26) of a linear motor (18) located downstream along the guideway (16) and the second connection region (28) of a linear motor (18) located upstream along the guideway (16) to one another and establishes a power and/or signal connection between the adjacent linear motors (18),
wherein the first connection regions (26) of the linear motors (18) are each identically arranged and formed at the linear motors (18), and wherein the second connection regions (28) of the linear motors (18) are each identically arranged and formed at the linear motors (18) such that the linear motors (18) and the plug connectors (32) are interchangeable,
and wherein in each case the first connection region (26) of a linear motor (18) located downstream along the guideway (16) and the second connection region (28) of a linear motor (18) located upstream along the guideway (16) merge into one another and together form a receiving region (30) in which a respective plug connector (32) is received,
**characterized in that** the adjacent linear motors (18) each have a recess (34), said recesses together forming the receiving region (30) for the plug connector (32).

2. A transport system according to claim 1,
**characterized in that** the plug connector (32) lies flush in the receiving region (30) and aligns the adjacent linear motors (18) with one another.

3. A transport system according to claim 1 or 2,
**characterized in that** the receiving region (30) has a cutout (36) extending away from the recess (34), with the plug connector (32) having a subsidiary section (38) which preferably engages flush into the cutout (36).

4. A transport system according to any one of the preceding claims,
**characterized in that** the plug connector (32) comprises a first plug-in region (40) which contacts one of the adjacent linear motors (18) and a second plug-in region (42) which contacts the other of the adjacent linear motors (18).

5. A transport system according to claim 4,
**characterized in that** the plug connector (32) comprises a third plug-in region (44) for supplying power and/or signals, in particular a signal for a safety shutdown.

6. A transport system according to claim 5,
**characterized in that** the third plug-in region (44) is configured to be connected to a power supply, a fieldbus or a sensor-actuator unit, in particular an RFID reader.

7. A transport system according to any one of the preceding claims, **characterized in that** the plug connector (32) comprises an auxiliary device, in particular a power supply unit for a sensor-actuator unit or a fieldbus component.

8. A transport system according to any one of the preceding claims, **characterized in that** the adjacent linear motors (18) are connected to one another by a first plug connector (32), which establishes a power connection between the adjacent linear motors (18), and a second plug connector (32) which establishes a signal connection between the adjacent linear motors (18).

9. A transport system according to claim 8,
**characterized in that** the linear motors (18) each have a power section (46) and a signal section (48), with the first plug connector (32) contacting the power section (46) and the second plug connector (32) contacting the signal section (48).

10. A transport system according to any one of the preceding claims, **characterized in that** the plug connector (32) has an identification feature which is in particular electronically readable.

11. A transport system according to any one of the preceding claims, **characterized in that** the plug connector (32) comprises an alignment aid (56) for aligning the adjacent linear motors (18) with one another, with the alignment aid (56) preferably transmitting a magnetic flux between adjacent linear motors (18).

12. A transport system according to any one of the preceding claims, **characterized in that** at least two functional groups of linear motors (18) are created within the transport system by means of the plug connectors (32).

13. A method for reconfiguring a plug connector (32) in a transport system which has a plurality of linear motors (18) which are arranged in a row and form a guideway (16), wherein the linear motors (18) each have at least a first connection region (26), which faces a linear motor (18) located upstream along the guideway (16), and a second connection region (28), which faces a linear motor (18) located downstream along the guideway (16), wherein a respective plug connector (32) mechanically connects the first connection region (26) of a linear motor (18) located downstream along the guideway (16) and the second connection region (28) of a linear motor (18) located upstream along the guideway (16) to one another and establishes a power and/or signal connection between the adjacent linear motors (18), wherein in each case the first connection region (26) of a linear motor (18) located downstream along the guideway (16) and the second connection region (28) of a linear motor (18) located upstream along the guideway (16) merge into one another and together form a receiving region (30) in which a respective plug connector (32) is received, and wherein the adjacent linear motors (18) each have a recess (34), said recesses together forming the receiving region (30) for the plug connector (32), wherein the method comprises:
removing the plug connector (32) from the connection regions (26, 28) of two adjacent linear motors (18);
inserting a further plug connector (32) into the connection regions (26, 28) such that the further plug connector (32) mechanically connects the two adjacent linear motors (18) to one another and establishes a power and/or signal connection between the adjacent linear motors (18).

## Revendications

1. Système de transport, en particulier système multi-porteurs (10), comprenant
plusieurs moteurs linéaires (18), qui sont disposés en série et forment une voie de guidage (16), et
au moins un élément de transport (12) qui peut être déplacé le long de la voie de guidage (16) au moyen des moteurs linéaires (18), ainsi qu'un connecteur enfichable (32) respectif,
les moteurs linéaires (18) comportant chacun au moins une première zone de raccordement (26), qui est tournée vers un moteur linéaire (18) situé en amont le long de la voie de guidage (16) et lui est associée, et une deuxième zone de raccordement (28) tournée vers un moteur linéaire (18) situé en aval le long de la voie de guidage (16) et lui étant associée, le connecteur enfichable (32) respectif reliant mécaniquement la première zone de raccordement (26) d'un moteur linéaire (18) situé en aval le long de la voie de guidage (16) et la deuxième zone de raccordement (28) d'un moteur linéaire (18) situé en amont le long de la voie de guidage (16) et établit une connexion de puissance et/ou de signal entre les moteurs linéaires (18) adjacents,
les premières zones de raccordement (26) des moteurs linéaires (18) étant chacune disposées et conçues de manière identique sur les moteurs linéaires (18), et les deuxièmes zones de raccordement (28) des moteurs linéaires (18) étant chacune disposées et conçues de manière identique sur les moteurs linéaires (18), de sorte que les moteurs linéaires (18) et les connecteurs enfichables (32) sont interchangeables,
et dans lequel respectivement la première zone de raccordement (26) d'un moteur linéaire (18) situé en aval le long de la voie de guidage (16) et la deuxième zone de raccordement (28) d'un moteur linéaire (18) situé en amont le long de la voie de guidage (16) se rejoignent et forment ensemble une zone de réception (30) dans laquelle est logé respectivement un connecteur enfichable (32),
**caractérisé en ce que** les moteurs linéaires adjacents (18) présentent chacun un renfoncement (34) qui forme conjointement la zone de réception (30) pour le connecteur enfichable (32).

2. Système de transport selon la revendication 1,
**caractérisé en ce que** le connecteur enfichable (32) repose à fleur dans la zone de réception (30) et aligne les moteurs linéaires adjacents (18) l'un par rapport à l'autre.

3. Système de transport selon la revendication 1 ou 2,
**caractérisé en ce que** la zone de réception (30) présente un évidement (36) s'étendant en s'éloignant du renfoncement (34), le connecteur enfichable (32) comportant une partie secondaire (38) qui s'engage de préférence à fleur dans l'évidement (36).

4. Système de transport selon l'une des revendications précédentes, **caractérisé en ce que** le connecteur enfichable (32) comporte une première zone de connexion (40) qui est en contact avec l'un des moteurs linéaires adjacents (18) et une deuxième zone de connexion (42) qui est en contact avec l'autre des moteurs linéaires adjacents (18).

5. Système de transport selon la revendication 4,
**caractérisé en ce que** le connecteur enfichable (32) comporte une troisième zone de connexion (44) destinée à l'alimentation en courant et/ou en signaux, en particulier d'un signal de coupure de sécurité.

6. Système de transport selon la revendication 5,
**caractérisé en ce que** la troisième zone de connexion (44) est conçue pour être reliée à une alimentation électrique, à un bus de terrain ou à une unité capteur-actionneur, en particulier à un lecteur RFID.

7. Système de transport selon l'une des revendications précédentes, **caractérisé en ce que** le connecteur enfichable (32) comporte un dispositif auxiliaire, en particulier un bloc d'alimentation pour une unité capteur-actionneur ou un composant de bus de terrain.

8. Système de transport selon l'une des revendications précédentes, **caractérisé en ce que** les moteurs linéaires adjacents (18) sont reliés entre eux par un premier connecteur enfichable (32), qui établit une connexion de puissance entre les moteurs linéaires adjacents (18), et un deuxième connecteur enfichable (32), qui établit une connexion de signal entre les moteurs linéaires adjacents (18).

9. Système de transport selon la revendication 8,
**caractérisé en ce que** les moteurs linéaires (18) comportent chacun une partie de puissance (46) et une partie de signal (48), le premier connecteur enfichable (32) étant en contact avec la partie de puissance (46) et le deuxième connecteur enfichable (32) avec la partie de signal (48).

10. Système de transport selon l'une des revendications précédentes, **caractérisé en ce que** le connecteur enfichable (32) comporte une caractéristique d'identification qui est en particulier lisible par voie électronique.

11. Système de transport selon l'une des revendications précédentes, **caractérisé en ce que** le connecteur enfichable (32) comporte une aide d'alignement (56) destiné à aligner les moteurs linéaires adjacents (18) les uns par rapport aux autres, l'aide d'alignement (56) transmettant de préférence un flux magnétique entre les moteurs linéaires adjacents (18).

12. Système de transport selon l'une des revendications précédentes, **caractérisé en ce qu'**au moins deux groupes fonctionnels de moteurs linéaires (18) sont créés à l'intérieur du système de transport au moyen des connecteurs enfichables (32).

13. Procédé de reconfiguration d'un connecteur enfichable (32) dans un système de transport comportant plusieurs moteurs linéaires (18) qui sont disposés en série et forment une voie de guidage (16), les moteurs linéaires (18) comportant chacun au moins une première zone de raccordement (26) tournée vers un moteur linéaire (18) situé en amont le long de la voie de guidage (16), et une deuxième zone de raccordement (28) tournée vers un moteur linéaire (18) situé en aval le long de la voie de guidage (16), un connecteur enfichable (32) reliant mécaniquement la première zone de raccordement (26) d'un moteur linéaire (18) situé en aval le long de la voie de guidage (16) et la deuxième zone de raccordement (28) d'un moteur linéaire (18) situé en amont le long de la voie de guidage (16) et établit une connexion de puissance et/ou de signal entre les moteurs linéaires (18) adjacents, la première zone de raccordement (26) d'un moteur linéaire (18) situé en aval le long de la voie de guidage (16) et la deuxième zone de raccordement (28) d'un moteur linéaire (18) situé en amont le long de la voie de guidage (16) se rejoignent et forment ensemble une zone de réception (30) dans laquelle est logé respectivement un connecteur enfichable (32), et dans lequel les moteurs linéaires adjacents (18) présentent chacun un renfoncement (34) qui forme conjointement la zone de réception (30) pour le connecteur enfichable (32), le procédé comprenant :
le retrait du connecteur enfichable (32) des zones de raccordement (26, 28) de deux moteurs linéaires adjacents (18) ;
l'insertion d'un autre connecteur enfichable (32) dans les zones de raccordement (26, 28) de telle sorte que l'autre connecteur enfichable (32) relie mécaniquement les deux moteurs linéaires adjacents (18) l'un à l'autre et établisse une connexion de puissance et/ou de signal entre les moteurs linéaires adjacents (18).
